# EUROPÄISCHE PATENTANMELDUNG

(11) **EP 4 421 462 A1**
(43) Veröffentlichungstag der Anmeldung: **28.08.2024**
(21) Anmeldenummer: 24156157.0
(22) Anmeldetag: 06.02.2024
(51) Int. Cl.: G01J 3/51, G01N 21/64, G01J 3/02, G01J 3/44, G01N 21/17

(54) **DETEKTORVORRICHTUNG ZUM ERFASSEN VON FLUORESZENZLICHT**

(30) Priorität: 27.02.2023 DE 102023104746
(71) Anmelder: Deutsches Zentrum für Luft- und Raumfahrt e.V., 53227 Bonn (DE)
(72) Erfinder: Dr. Kölbl, Christoph, 74239 Hardthausen (DE); Ellingen, Elias, 74239 Hardthausen (DE); Diedrich, Manu, 74239 Hardthausen (DE)
(74) Vertreter: RPK Patentanwälte Reinhardt und Kaufmann Partnerschaft mbB

(57) **Zusammenfassung**

Die Erfindung betrifft eine Detektorvorrichtung (100) und ein Verfahren zum Erfassen von Fluoreszenzlicht (50), insbesondere von laserinduziertem Fluoreszenzlicht (50), von einer in einer Detektionsentfernung (61) befindlichen Probe (60), umfassend wenigstens eine Detektionsoptik (10), welche zum Sammeln und/oder Fokussieren des von der Probe (60) ausgehenden Fluoreszenzlichts (50) sowie zum Einkoppeln des gesammelten und/oder fokussierten Fluoreszenzlichts (50) in ein optisches Faserbündel (20) ausgebildet ist, ein Spektrometer (30), welches mit dem Faserbündel (20) optisch gekoppelt ist und welches eine Mehrzahl von Detektoren (40, 42, 44, 46) aufweist, welche zum Einkoppeln des von dem Faserbündel (20) übertragenen Fluoreszenzlichts (50) ausgebildet sind. Jeweils eine Gruppe (32, 34, 36, 38) von Fasern (26) des Faserbündels (20) ist einem Detektor (40, 42, 44, 46) der Mehrzahl von Detektoren (40, 42, 44, 46) zugeordnet.

## Beschreibung

### Stand der Technik

Die Erfindung betrifft eine Detektorvorrichtung und ein Verfahren zum Erfassen von Fluoreszenzlicht, insbesondere von laserinduziertem Fluoreszenzlicht, von einer in einer Detektionsentfernung befindlichen Probe.

In der Regel erfolgt in der Laserspektroskopie die Erfassung von Spektren durch beispielsweise durch eine Erfassung mit einem Spektrometer. In diesem Fall können sehr viele spektrale Banden gleichzeitig detektiert werden. Allerdings ist die zeitliche Auflösung eingeschränkt und das das Signal-Rausch-Verhältnis kann ungünstig sein. Weiter kann eine Erfassung mit Einzeldetektoren, beispielsweise multispektral, erfolgen. Es wird eine Kombination aus Bandpassfilter und Detektor eingesetzt, sodass eine hohe zeitliche Auflösung erreicht werden kann. Jedoch ist die Anzahl der Kanäle üblicherweise auf ein Minimum, beispielsweise zwei Kanäle beschränkt. Außerdem kann eine Erfassung mit Integrator-Spektrometern beispielsweise hyperspektral durch Einsatz einer Mischung aus Spektrometer und Einzeldetektoren erfolgen. Damit kann eine vergleichsweise hohe zeitliche Auflösung erreicht werden, bei einer mittleren Anzahl von spektralen Kanälen, beispielsweise 32 oder 64 Kanälen. Dies erfordert jedoch teure Datenerfassungsgeräte. Die Pulswiederholrate wird durch die Datenerfassung begrenzt.

Die DE 10 2018 129 807 A1 offenbart weiter ein System zur Klassifizierung chemischer und/oder biologischer Stoffe, insbesondere von Gefahrstoffen. Das System umfasst eine elektromagnetische Strahlungsquelle, insbesondere in Form eines Lasers, zum Erzeugen eines Anregungspulses zum Anregen einer einen chemischen und/oder biologischen Stoff enthaltenden, umfassenden oder tragenden Probe zur Fluoreszenz.

Das System umfasst weiter eine erste Spektroskopieeinrichtung zum wellenlängenabhängigen Messen einer Intensität von der Probe aufgrund der Anregung mit dem einen Anregungspuls emittierter Fluoreszenzstrahlung und eine zweite Spektroskopieeinrichtung zum zeitabhängigen Messen einer Intensität der von der emittierten Fluoreszenzstrahlung für eine Wellenlänge und/oder einen Wellenlängenbereich. Das System weist eine Speichereinrichtung auf zum Speichern eines Referenzspektrums in Form eines wellenlängenabhängigen Referenzfluoreszenzspektrums eines chemischen Stoffs und eines zeitabhängigen Referenzfluoreszenzspektrums des einen chemischen und/oder biologischen Stoffs. Das System umfasst weiter eine Vergleichseinrichtung zum Vergleichen der gemessenen wellenlängenabhängigen Intensität und der gemessenen zeitabhängigen Intensität der von der Probe emittierten Fluoreszenzstrahlung mit dem einen wellenlängenabhängigen Referenzfluoreszenzspektrum und dem einen zeitabhängigen Referenzfluoreszenzspektrum zum Bestimmen, ob die Probe den mindestens einen chemischen und/oder biologischen Stoff einer Stoffklasse enthält oder nicht.

### Offenbarung der Erfindung

Die Aufgabe der Erfindung ist es, eine kostengünstige und robuste Detektorvorrichtung zum Erfassen von Fluoreszenzlicht, insbesondere von laserinduziertem Fluoreszenzlicht, von einer in einer Detektionsentfernung befindlichen Probe zu schaffen.

Eine weitere Aufgabe der Erfindung ist es, ein Verfahren zum Erfassen von Fluoreszenzlicht, insbesondere von laserinduziertem Fluoreszenzlicht, mit einer solchen Detektorvorrichtung anzugeben.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Es wird nach einem Aspekt der Erfindung eine Detektorvorrichtung zum Erfassen von Fluoreszenzlicht, insbesondere von laserinduziertem Fluoreszenzlicht, von einer in einer Detektionsentfernung befindlichen Probe vorgeschlagen, umfassend wenigstens eine Detektionsoptik, welche zum Sammeln und/oder Fokussieren des von der Probe ausgehenden Fluoreszenzlichts sowie zum Einkoppeln des gesammelten und/oder fokussierten Fluoreszenzlichts in ein optisches Faserbündel ausgebildet ist. Weiter umfasst die Detektorvorrichtung ein Spektrometer, welches mit dem Faserbündel optisch gekoppelt ist und welches eine Mehrzahl von Detektoren aufweist, welche zum Einkoppeln des von dem Faserbündel übertragenen Fluoreszenzlichts ausgebildet sind. Dabei ist jeweils eine Gruppe von Fasern des Faserbündels einem Detektor der Mehrzahl von Detektoren zugeordnet.

Die vorgeschlagene Detektorvorrichtung weist ein faserbasiertes Mehrkanal Messsystem auf. Hierbei wird das Fluoreszenzlicht nach der Detektionsoptik, mit der das Fluoreszenzlicht gesammelt und fokussiert wird, in eine spezielle Multimodenfaser eingekoppelt und die einzelnen Signale über Bandpassfilter auf dem Detektor separiert. Damit können bisher übliche Freistrahlaufbauten mit Strahlteilern oder rein filterbasierte Imaging-Anwendungen vermieden werden.

Das optische Messsignal wird in eine speziell konzipierte optische Lichtleitfaser eingekoppelt, um Justagefehler zu vermeiden und damit eine Signalveränderung aufgrund von Einkopplungsfehlern zu minimieren. Gleichzeitig wird die Faserverkopplung durch Minimierung von Obstruktionen aufgrund der Leerräume zwischen den Einzelfasern deutlich verringert, was zu einem verbesserten Messsignal führt. Bei der vorgeschlagenen Detektorvorrichtung wird eine Vielzahl an Einzelfasern eingesetzt, die so kombiniert werden, dass durch die Anordnung eine gleichmäßige Ausleuchtung, auch bei Verschiebung des Fokus der Detektionsoptik in einer lateralen Richtung und/oder entlang der optischen Achse erzielt wird. Vorteilhaft kann so ein robustes Detektorkonzept zur Reduktion von Justagefehlern erreicht werden.

Weiter wird die Datenerfassung auf die Mehrkanalanordnung abgestimmt, wodurch Hintergrundsignale effektiv reduziert und automatisch abgezogen werden können. Dabei kann vorteilhaft eine sogenannte Boxcar-Integration eingesetzt werden.

Bei einer Boxcar-Integration, auch als Gated-Integration bezeichnet, wird ein Eingangssignal nach einer definierten Wartezeit (beispielsweise durch einen Trigger-Delay) über eine bestimmte Zeitdauer integriert und dann über viele Integrationszyklen gemittelt. Auf diese Weise kann das Signal-zu-Rausch-Verhältnis entscheidend verbessert werden. Das Verfahren wird bevorzugt bei periodischen Signalen eingesetzt.

Der Hintergrundabzug kann bereits vor der Boxcar-Integration erfolgen, wodurch die Dynamik der Messung erhöht werden kann.

Nach einer vorteilhaften Ausgestaltung der Detektorvorrichtung kann das Faserbündel wenigstens vier Gruppen von Fasern aufweisen. Alternativ oder zusätzlich kann dabei das Spektrometer wenigstens vier Detektoren aufweisen. Auf diese Weise kann das Fluoreszenzlicht günstig auf mehrere Detektoren, welche unterschiedliche spektrale Bereiche detektieren, aufgeteilt werden. Durch die Verwendung einer Vielzahl von Fasern, welche in Gruppen aufgeteilt werden, können Justagefehler bei der Einkopplung des Fluoreszenzlichts in das Faserbündel reduziert werden.

Nach einer vorteilhaften Ausgestaltung der Detektorvorrichtung kann jedem Detektor der Mehrzahl von Detektoren eine gleiche Anzahl von Fasern zugeordnet sein. So kann Fluoreszenzlicht in gleicher Intensität auf die einzelnen Detektoren eingekoppelt werden.

Nach einer vorteilhaften Ausgestaltung der Detektorvorrichtung kann zwischen den Fasern und den Detektoren jeweils ein optisches Bandpassfilter angeordnet sein, welches einen spektralen Bereich eines Fluoreszenzspektrums des übertragenen Fluoreszenzlichts herausfiltert. Dadurch kann eine effektive Zuordnung des Fluoreszenzlichts der Probe und damit eine schnelle Identifikation der Probe und/oder der chemischen Zusammensetzung der Probe erreicht werden.

Nach einer vorteilhaften Ausgestaltung der Detektorvorrichtung kann das Spektrometer zur Auswertung der gefilterten spektralen Bereiche mittels Boxcar-Integration ausgebildet sein. Auf diese Weise kann ein günstiges Signal-zu-Rausch-Verhältnis sowie eine hohe Dynamik der Signalerfassung umgesetzt werden.

Nach einer vorteilhaften Ausgestaltung der Detektorvorrichtung kann eine Querschnittsfläche des Faserbündels wenigstens einer Querschnittsfläche des von der Detektionsoptik auf die Querschnittsfläche des Faserbündels abgebildeten Fluoreszenzlichts entsprechen. Dadurch können Justagefehler bei der Einkopplung des Fluoreszenzlichts in das Faserbündel reduziert werden.

Nach einer vorteilhaften Ausgestaltung der Detektorvorrichtung kann von jeder Gruppe von Fasern wenigstens eine Faser innerhalb der Querschnittsfläche des von der Detektionsoptik auf die Querschnittsfläche des Faserbündels abgebildeten Fluoreszenzlichts angeordnet sein. Dadurch kann eine günstige Einkopplung der vollen Intensität des Fluoreszenzlichts in die jeweilige Gruppe von Fasern erreicht werden.

Nach einer vorteilhaften Ausgestaltung der Detektorvorrichtung kann jeweils mehr als eine Eintrittsfläche der den jeweiligen unterschiedlichen Detektoren zugeordneten Fasern innerhalb der Querschnittsfläche des von der Detektionsoptik auf die Querschnittsfläche des Faserbündels abgebildeten Fluoreszenzlichts angeordnet sein. Dadurch kann eine günstige Einkopplung der vollen Intensität des Fluoreszenzlichts in die jeweilige Gruppe von Fasern erreicht werden. Justagefehler bei der Einkopplung des Fluoreszenzlichts in die Gruppen von Fasern können günstigerweise reduziert werden.

Nach einer vorteilhaften Ausgestaltung der Detektorvorrichtung können optische Eintrittsflächen für das Fluoreszenzlicht der den unterschiedlichen Detektoren zugeordneten Fasern über die Querschnittsfläche des von der Detektionsoptik auf die Querschnittsfläche des Faserbündels abgebildeten Fluoreszenzlichts im Wesentlichen gleich verteilt sein. Auf diese Weise kann eine gleiche Intensität des Fluoreszenzlichts in die verschiedenen Gruppen von Fasern eingekoppelt werden. Justagefehler bei der Einkopplung des Fluoreszenzlichts in die Gruppen von Fasern können günstigerweise reduziert werden.

Nach einer vorteilhaften Ausgestaltung der Detektorvorrichtung kann das Spektrometer wenigstens eine Platine aufweisen, an der Ausgänge der Fasern angeordnet und/oder optisch angekoppelt sind. So kann das Fluoreszenzlicht direkt auf die auf der Platine angeordneten Detektoren eingekoppelt werden. Auf diese Weise kann ein kompakter und kostengünstiger Aufbau der Detektorvorrichtung erreicht werden.

Nach einer vorteilhaften Ausgestaltung der Detektorvorrichtung kann das Faserbündel als Multimode-Faserbündel ausgebildet sein. Eine günstige Übertragung des Fluoreszenzlichts von der Detektoroptik zu den Detektoren kann so gewährleistet werden. Die Vielzahl an Einzelfasern kann so kombiniert werden, dass durch die Anordnung eine gleichmäßige Ausleuchtung der Gruppen von Einzelfasern, auch bei Verschiebung des Fokus erzielt wird und damit mögliche Justagefehler reduziert werden.

Nach einer vorteilhaften Ausgestaltung der Detektorvorrichtung kann das Spektrometer zum automatischen Abzug von Hintergrundlicht von dem übertragenen Fluoreszenzlicht ausgebildet sein. Auf diese Weise kann das Signal-zu-Rausch-Verhältnis entscheidend verbessert werden.

Nach einem weiteren Aspekt der Erfindung wird ein Verfahren zum Erfassen von Fluoreszenzlicht, insbesondere von laserinduziertem Fluoreszenzlicht, einer in einer Detektionsentfernung befindlichen Probe mit einer Detektorvorrichtung vorgeschlagen, umfassend wenigstens die Schritte Einstrahlen von gepulstem Laserlicht auf die Probe; Sammeln und/oder Fokussieren des von der Probe ausgehenden Fluoreszenzlichts durch eine Detektionsoptik; Einkoppeln des gesammelten und/oder fokussierten Fluoreszenzlichts in ein optisches Faserbündel; und Einkoppeln des von dem Faserbündel übertragenen Fluoreszenzlichts durch einzelne Fasern des Faserbündels, welche jeweils einem Detektor einer Mehrzahl von Detektoren zugeordnet sind, in den jeweiligen Detektor.

Die Detektorvorrichtung weist ein faserbasiertes Mehrkanal Messsystem auf. Hierbei wird das Fluoreszenzlicht nach der Detektionsoptik, mit der das Fluoreszenzlicht gesammelt und fokussiert wird, in eine spezielle Multimodenfaser eingekoppelt und die einzelnen Signale über Bandpassfilter auf dem Detektor separiert.

Nach dem vorgeschlagenen Verfahren wird das optische Messsignal in eine speziell konzipierte optische Lichtleitfaser eingekoppelt, um Justagefehler zu vermeiden und damit eine Signalveränderung aufgrund von Einkopplungsfehlern zu minimieren. Gleichzeitig wird die Faserverkopplung durch Minimierung von Obstruktionen aufgrund der Leerräume zwischen den Einzelfasern deutlich verringert, was zu einem verbesserten Messsignal führt.

Bei der Detektorvorrichtung wird eine Vielzahl an Einzelfasern eingesetzt, die so kombiniert werden, dass durch die Anordnung eine gleichmäßige Ausleuchtung, auch bei Verschiebung des Fokus der Detektionsoptik in einer lateralen Richtung und/oder entlang der optischen Achse erzielt wird. Vorteilhaft kann so eine robuste Erfassung von Fluoreszenzlicht, insbesondere von laserinduziertem Fluoreszenzlicht, mit der Detektionsentfernung erreicht werden.

Weiter wird die Datenerfassung auf die Mehrkanalanordnung abgestimmt, wodurch Hintergrundsignale effektiv reduziert und automatisch abgezogen werden können. Dabei kann vorteilhaft die Boxcar-Integration eingesetzt werden. Auf diese Weise kann das Signal-zu-Rausch-Verhältnis entscheidend verbessert werden. Der Hintergrundabzug des Fluoreszenzlichts kann bereits vor der Boxcar-Integration erfolgen, wodurch die Dynamik der Messung erhöht werden kann.

Nach einer vorteilhaften Ausgestaltung des Verfahrens kann in den jeweiligen Detektor ein mittels eines optischen Bandpassfilters gefilterter spektraler Bereich eines Fluoreszenzspektrums des übertragenen Fluoreszenzlichts eingekoppelt werden. Dadurch kann eine effektive Zuordnung des Fluoreszenzlichts der Probe und damit eine schnelle Identifikation der Probe und/oder der chemischen Zusammensetzung der Probe erreicht werden.

Nach einer vorteilhaften Ausgestaltung des Verfahrens kann der in dem jeweiligen Detektor empfangene gefilterte spektrale Bereich des übertragenen Fluoreszenzlicht in dem Spektrometer mittels Boxcar-Integration ausgewertet werden. Auf diese Weise kann ein günstiges Signal-zu-Rausch-Verhältnis sowie eine hohe Dynamik der Signalerfassung umgesetzt werden.

Nach einer vorteilhaften Ausgestaltung des Verfahrens kann in dem Spektrometer Hintergrundlicht von dem übertragenen Fluoreszenzlicht automatisch abgezogen werden. Auf diese Weise kann das Signal-zu-Rausch-Verhältnis entscheidend verbessert werden.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine Messanordnung mit einer Detektorvorrichtung zum Erfassen von Fluoreszenzlicht, insbesondere von laserinduziertem Fluoreszenzlicht, von einer in einer Detektionsentfernung befindlichen Probe nach einem Ausführungsbeispiel der Erfindung;
- Fig. 2: die Detektorvorrichtung nach einem Ausführungsbeispiel der Erfindung;
- Fig. 3: ein Faserbündel der Detektorvorrichtung mit vier Fasern;
- Fig. 4: ein Faserbündel der Detektorvorrichtung mit einer Vielzahl an Fasern;
- Fig. 5: Auswirkungen eines Justagefehlers bei einem Faserbündel mit vier Fasern;
- Fig. 6: Auswirkungen eines Justagefehlers bei einem Faserbündel mit einer Vielzahl an Fasern;
- Fig. 7: eine Aufteilung der vier Fasern des Faserbündels zum Einkoppeln in die Detektoren;
- Fig. 8: eine Aufteilung der vier Gruppen von Fasern des Faserbündels zum Einkoppeln in die Detektoren;
- Fig. 9-11: verschiedene Ausführungsformen des Faserbündels;
- Fig. 12: eine schematische Darstellung der Intensität des einfallenden Lichts in Abhängigkeit der Zeit;
- Fig. 13: ein typisches Fluoreszenzspektrum, bei dem vier Spektralbereiche mit einzelnen Detektoren herausgefiltert und mit hoher zeitlicher Auflösung gemessen werden;
- Fig. 14: eine Erfassung eines zeitlichen Detektorsignals mit einem Integrationsfenster;
- Fig. 15: ein Blockschaltbild der Messanordnung mit der Detektorvorrichtung nach einem Ausführungsbeispiel der Erfindung; und
- Fig. 16: ein Blockschaltbild einer Vier-Kanal-Platine der Detektorvorrichtung.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

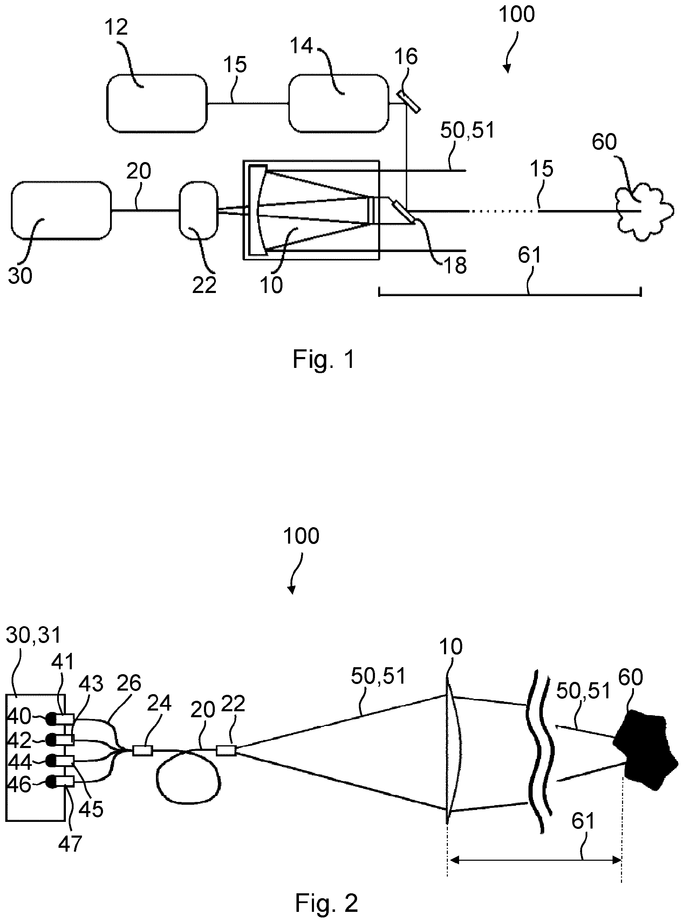

Figur 1 zeigt eine Messanordnung mit einer Detektorvorrichtung 100 zum Erfassen von Fluoreszenzlicht, insbesondere von laserinduziertem Fluoreszenzlicht, von einer in einer Detektionsentfernung 61 befindlichen Probe 60 nach einem Ausführungsbeispiel der Erfindung.

Als Laser 12 kann eine gepulste Lasereinheit eingesetzt, deren Emission im UV oder VIS Spektralbereich liegt (beispielsweise bei. 355nm oder 532nm) und eine Wiederholrate im Bereich von Hz - MHz (typischerweise 1 - 20 kHz) hat. Je höher die Repetitionsrate, desto schneller kann das Spektrum erfasst werden. Die Pulsbreite liegt typischerweise im Nanosekundenbereich.

Damit der Abstand 61 zur Probe bestimmt werden kann, sollte der Laserpuls eine steil ansteigende Flanke besitzen.

Das Laserlicht 15 durchläuft eine Einheit zur Strahlanpassung 14, in der beispielsweise der Strahldurchmesser bzw. die Divergenz angepasst werden kann, und wird anschließend über einen Umlenkspiegel 16 und einen Auskoppelspiegel 18 auf die zu untersuchende Probe 60 gelenkt. Sowohl das elastisch zurückgestreute Laserlicht 51 aufgrund der Rayleigh-Streuung als auch das inelastisch gestreute, spektral verschobene Licht 51 aufgrund des Raman-Effekts, oder Fluoreszenzlicht 50 aufgrund von laserinduzierter Fluoreszenz, dem Beitrag durch die elektronische Anregung, werden mit einer Detektionsoptik 10 der Detektorvorrichtung 100 aus einem Abstand, welcher als Detektionsabstand 61 bezeichnet wird, gesammelt, fokussiert und in eine weitere Einheit zur Strahlanpassung, die Einkoppeleinheit 22 für das optische Faserbündel 20, eingekoppelt. Über das Faserbündel 20 werden das Fluoreszenzlicht 50 sowie das gestreute Laserlicht 51 wie auch Hintergrundlicht in das Spektrometer 30 geleitet.

Im hier vorgeschlagenen System kann nach der Einkopplung in das Faserbündel 20 über Bandpassfilter die Auswahl der spektralen Kanäle in jeder Gruppe von Fasern erfolgen, bevor mit einer schnellen Fotodiode, beispielsweise einer Avalanche Photodiode oder einem Photomultiplier das Fluoreszenzlicht 50 aus dem Spektrum detektiert wird.

In Figur 2 ist die Detektorvorrichtung 100 nach einem Ausführungsbeispiel der Erfindung dargestellt.

Die Detektorvorrichtung 100 umfasst die Detektionsoptik 10, welche zum Sammeln und/oder Fokussieren des von der Probe 60 ausgehenden Fluoreszenzlichts 50 sowie zum Einkoppeln des gesammelten und/oder fokussierten Fluoreszenzlichts 50 in ein optisches Faserbündel 20 ausgebildet ist. Auch das gestreute Laserlicht 51 wie auch Hintergrundlicht werden über die Detektionsoptik 10 in das Faserbündel 20 eingekoppelt.

Weiter umfasst die Detektorvorrichtung 100 ein Spektrometer 30, welches mit dem Faserbündel 20 optisch gekoppelt ist und welches eine Mehrzahl von Detektoren 40, 42, 44, 46 aufweist, welche zum Einkoppeln des von dem Faserbündel 20 übertragenen Fluoreszenzlichts 50 ausgebildet sind.

Vorteilhaft kann das Faserbündel 20 wenigstens vier Gruppen 32, 34, 36, 38 von Fasern 26 aufweisen und das Spektrometer 30 kann wenigstens vier Detektoren 40 aufweisen.

Dabei ist jeweils eine Gruppe 32, 34, 36, 38 von Fasern 26 des Faserbündels 20 einem Detektor 40, 42, 44, 46 der Mehrzahl von Detektoren 40, 42, 44, 46 zugeordnet. Jedem Detektor 40, 42, 44, 46 der Mehrzahl von Detektoren 40, 42, 44, 46 ist eine gleiche Anzahl von Fasern 26 zugeordnet. Bei dem in Figur 2 dargestellten Ausführungsbeispiel werden vier Gruppen 32, 34, 36, 38 von Fasern 26 des Faserbündels 20 und vier Detektoren 40, 42, 44, 46 eingesetzt.

Zwischen den Fasern 26 und den Detektoren 40, 42, 44, 46 ist jeweils ein optisches Bandpassfilter 41, 43, 45, 47 angeordnet, welches einen spektralen Bereich 72, 74, 76, 78 eines Fluoreszenzspektrums 70 des übertragenen Fluoreszenzlichts 50 herausfiltert.

Das Fluoreszenzlicht 50 sowie das gestreute Laserlicht 51 wird über die Einkoppeleinheit 22 gleichmäßig in die vier Gruppen 32, 34, 36, 38 von Fasern 26 des Faserbündels 20 eingekoppelt. Die Trennung auf die vier Gruppen 32, 34, 36, 38 ist nicht spektral, da am Ausgang der vier Gruppen 32, 34, 36, 38 alle Spektralbereiche vorliegen und dann erst durch die Bandpassfilter 41, 43, 45, 47 vor den Detektoren 40, 42, 44, 46 getrennt und ausgewählt werden. Über die Bandpassfilter 41, 43, 45, 47 erfolgt auch die Abtrennung des gestreuten Laserlichts 51.

Bei dem In Figur 2 dargestellten Ausführungsbeispiel wird das von der Probe 60 emittierte Fluoreszenzlicht 50 sowie das gestreute Laserlicht 51 über die Detektionsoptik 10 auf die Einkoppeleinheit 22 abgebildet. Die Detektionsentfernung 61 zwischen Detektionsoptik 10 und Probe 60 kann typischerweise ca. 2 m betragen. Jedoch kann die Detektionsentfernung 61, abhängig von der Pulswiederholrate des Lasers 12, auch auf bis auf 30 km angepasst werden, bei einer Pulswiederholrate von beispielsweise 5 kHz.

Das in das Faserbündel 20 eingekoppelte Laserlicht 50, 51 wird nach der Faseraufteilung 24 auf die einzelnen Detektoren 40, 42, 44, 46 geleitet, denen jeweils ein Bandpassfilter 41, 43, 45, 47 vorgeschaltet ist. Detektoren 40, 42, 44, 46 und Bandpassfilter 41, 43, 45, 47 können zweckmäßig auf einer Platine 31 des Spektrometers 30 angeordnet sein.

Nach dem vorgeschlagenen Verfahren zum Erfassen von Fluoreszenzlicht 50, insbesondere von laserinduziertem Fluoreszenzlicht 50, einer in einer Detektionsentfernung 61 befindlichen Probe 60 mit der Detektorvorrichtung 100 wird zunächst gepulstes Laserlicht 15 auf die Probe 60 eingestrahlt. Danach wird das von der Probe 60 ausgehende Fluoreszenzlicht 50 durch die Detektionsoptik 10 gesammelt und/oder fokussiert. Das gesammelte und/oder fokussierte Fluoreszenzlicht 50 wird in das optische Faserbündel 20 eingekoppelt. Dabei wird das von dem Faserbündel 20 übertragene Fluoreszenzlicht 50 durch einzelne Fasern 26 des Faserbündels 20, welche jeweils einem Detektor 40, 42, 44, 46 einer Mehrzahl von Detektoren 40, 42, 44, 46 zugeordnet sind, in den jeweiligen Detektor 40, 42, 44, 46 eingekoppelt.

So wird in den jeweiligen Detektor 40, 42, 44, 46 ein mittels eines optischen Bandpassfilters 41, 43, 45, 47 gefilterter spektraler Bereich 72, 74, 76, 78 des Fluoreszenzspektrums 70 des übertragenen Fluoreszenzlichts 50 eingekoppelt.

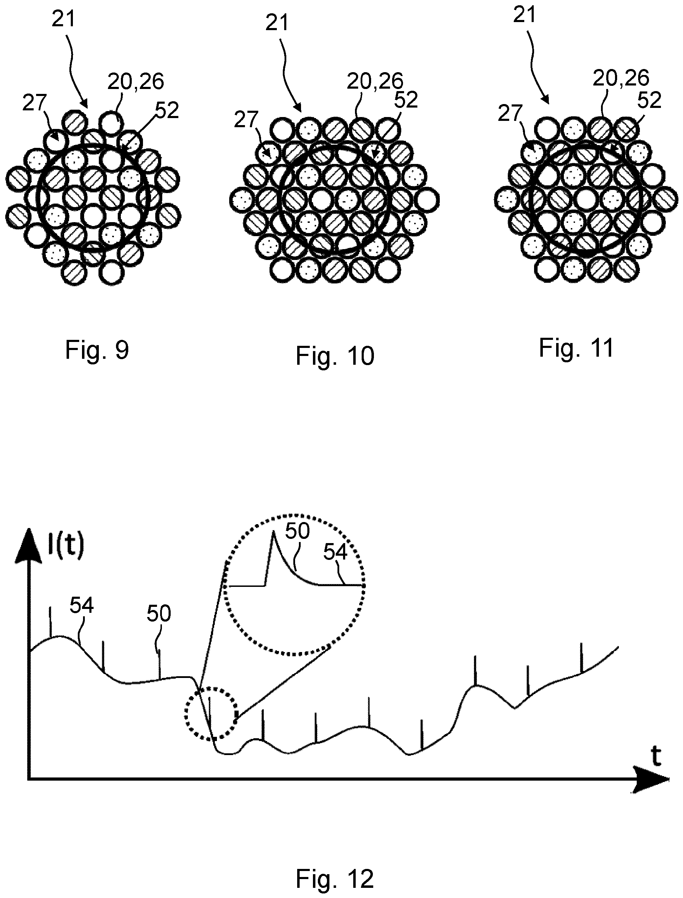

Der in dem jeweiligen Detektor 40, 42, 44, 46 empfangene gefilterte spektrale Bereich 40, 42, 44, 46 des übertragenen Fluoreszenzlicht 50 kann in dem Spektrometer 30 mittels Boxcar-Integration ausgewertet werden (siehe Figur 12).

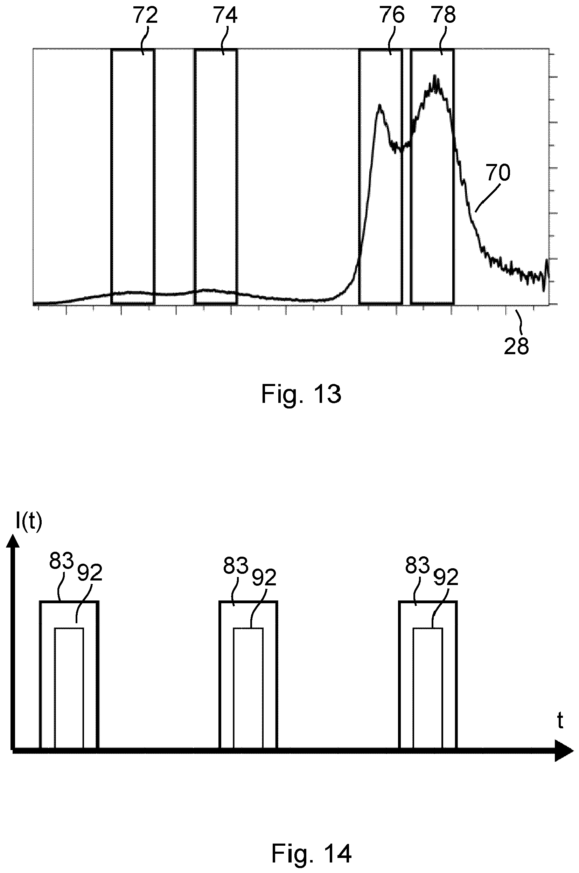

In dem Spektrometer 30 kann Hintergrundlicht von dem übertragenen Fluoreszenzlicht 50 automatisch abgezogen werden (siehe Figur 13).

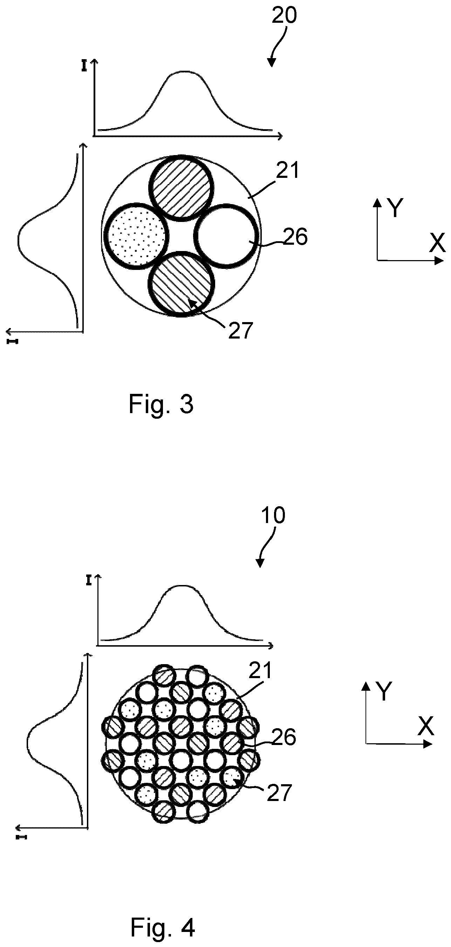

In den folgenden Figuren 3 bis 8 sind die Vorteile bei der Verwendung von Faserbündeln 20 mit einer Vielzahl von Fasern 26 deutlich gemacht.

Figur 3 zeigt ein Faserbündel 20 der Detektorvorrichtung 100 mit vier Fasern 26, während in Figur 4 ein Faserbündel 20 der Detektorvorrichtung 100 mit einer Vielzahl an Fasern 26 dargestellt ist, von denen jeweils nur eine Faser 26 mit einem Bezugszeichen versehen ist. Schematisch ist jeweils eine Intensitätsverteilung der eingekoppelten Leistung bei Gauß-Moden in einer X- und Y-Richtung dargestellt. Das Faserbündel 20 in Figur 4 ist als Multimode-Faserbündel 20 ausgebildet.

Beispielsweise wird bei Verwendung eines üblichen Faserbündels 20 mit 4 Fasern 26 und 200 µm Faserdurchmesser, wie in Figur 3 dargestellt, in etwa eine Querschnittsfläche 21 von 0,183mm² durch die Einzelfasern 26 abgedeckt.

Bei Verwendung einer Multimode-Faser 26 mit 10 µm Faserdurchmesser und derselben Querschnittsfläche 21 des Faserbündels 20 können also insgesamt ca. 1830 Fasern 26 eingebaut werden. Bei einer anderen Konfiguration und/oder Packung wären noch mehr Fasern 26 denkbar.

Durch die Verwendung von mehr Faserkernen bei der Anordnung in Figur 4 gegenüber der Anordnung in Figur 3 ändert sich der Obstruktionsanteil über das gesamte Faserbündel 20 nicht, da nur der Durchmesser der Fasern 26 geändert ist. Der Obstruktionsanteil ist dabei definiert durch die Summe der Eintrittsflächen 27 der Einzelfasern 26 in einem Einheitsquadrat bezogen auf die Fläche des Einheitsquadrats. Allerdings wird bei einer einfallenden, beispielsweise gaußförmigen Intensitätsverteilung mehr Intensität im Zentrum des Faserbündels 20 eingekoppelt. In diesem Fall ist es günstig, dass, je höher die Faserndichte ist, desto mehr Fasern 26 in zentralen Bereich platziert werden können, wodurch sich die Einkopplung verbessert. Im Gegensatz dazu kann durch eine andere Anordnung der Fasern 26 (siehe Figuren 9-11) der Obstruktionsanteil verbessert werden. Der Obstruktionsanteil für die Anordnungen in den Figuren 3 und 4 liegt bei 78,5 %.

Jedoch verbessert sich bei Gauß-Moden die Einkopplung deutlich, weil im mittleren Bereich des Faserkerns die meiste Intensität vorhanden ist und dementsprechend dort die meiste Fluoreszenz angeregt wird. Bei der Faseranordnung mit vier Fasern 26 ist dort aber keine Faser 26 angeordnet. Bei einem Faserbündel 20 mit einer Vielzahl an Fasern 26 kann der Zentralbereich deutlich besser eingekoppelt werden und somit Signalverluste reduziert werden.

Optische Eintrittsflächen 27 für das Fluoreszenzlicht der den unterschiedlichen Detektoren 40, 42, 44, 46 zugeordneten Fasern 26 sind über die Querschnittsfläche 52 des von der Detektionsoptik 10 auf die Querschnittsfläche 21 des Faserbündels 20 abgebildeten Fluoreszenzlichts 50 im Wesentlichen gleich vertei lt.

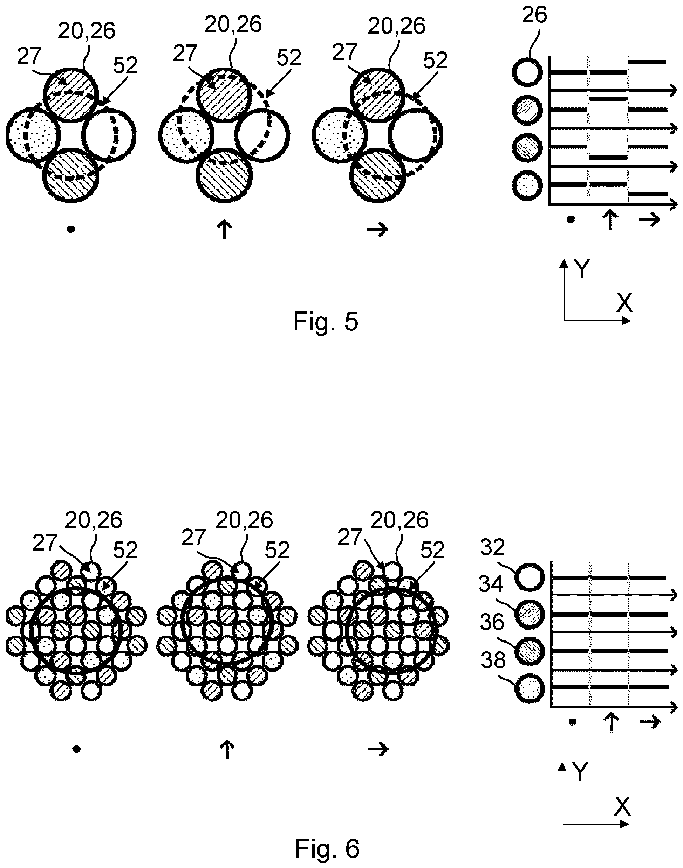

Figur 5 zeigt Auswirkungen eines Justagefehlers bei der Einkopplung des Fluoreszenzlichts 50 auf ein Faserbündel 20 mit vier Fasern 26, während in Figur 6 Auswirkungen eines Justagefehlers bei einem Faserbündel 20 mit einer Vielzahl an Fasern 26 dargestellt ist.

Vorteilhaft kann eine Querschnittsfläche 21 des Faserbündels 20 wenigstens einer Querschnittsfläche 52 des von der Detektionsoptik 10 auf die Querschnittsfläche 21 des Faserbündels 20 abgebildeten Fluoreszenzlichts 50 entsprechen.

Die Querschnittsfläche 52 des abgebildeten Fluoreszenzlichts 50 mit der entsprechenden Lasermode ist als gestrichelter Kreis (Figur 5) bzw. durchgezogener Kreis (Figur 6) dargestellt.

Bei dem in Figur 6 dargestellten Faserbündel 20 mit einer Vielzahl von Fasern 26 ist von jeder Gruppe 32, 34, 36, 38 von Fasern 26 wenigstens eine Faser 26 innerhalb der Querschnittsfläche 52 des von der Detektionsoptik 10 auf die Querschnittsfläche 21 des Faserbündels 20 abgebildeten Fluoreszenzlichts 50 angeordnet ist.

Dabei ist jeweils mehr als eine Eintrittsfläche 27 der den jeweiligen unterschiedlichen Detektoren 40, 42, 44, 46 zugeordneten Fasern 26 innerhalb der Querschnittsfläche 52 des von der Detektionsoptik 10 auf die Querschnittsfläche 21 des Faserbündels 20 abgebildeten Fluoreszenzlichts 50 angeordnet.

In den Figuren ist jeweils die Lasermode bei optimaler Justage auf das Faserbündel 20 dargestellt (gekennzeichnet durch einen Punkt), bei einem Justagefehler in Y-Richtung (gekennzeichnet durch einen senkrechten Pfeil) und bei einem Justagefehler in X-Richtung (gekennzeichnet durch einen waagrechten Pfeil). Im rechten Teil der Figuren sind neben den Faserbündeln 20 mit den angedeuteten Querschnittsflächen 52 des abgebildeten Fluoreszenzlichts 50 die Intensitäten in den einzelnen Fasern 26 für die drei Konfigurationen dargestellt.

In Figur 5 sind je nach Verschiebung der Lasermode in die beiden Richtungen Y und X die Intensitäten in den einzelnen Fasern 26 größer oder kleiner als bei optimaler Justage. Das Einkopplungsverhältnis zwischen den einzelnen Fasern 26 ändert sich.

Bei der in Figur 6 dargestellten Konfiguration mit einer Vielzahl an Fasern 26 hat eine Verschiebung der Lasermode sowohl in Y- und/oder X-Richtung als auch in Z-Richtung, also der Richtung der Fasern 26, keinen Einfluss auf die Intensitäten in den entsprechenden Gruppen 32, 34, 36, 38 von Fasern 26. Messartefakte können auf diese Weise reduziert werden.

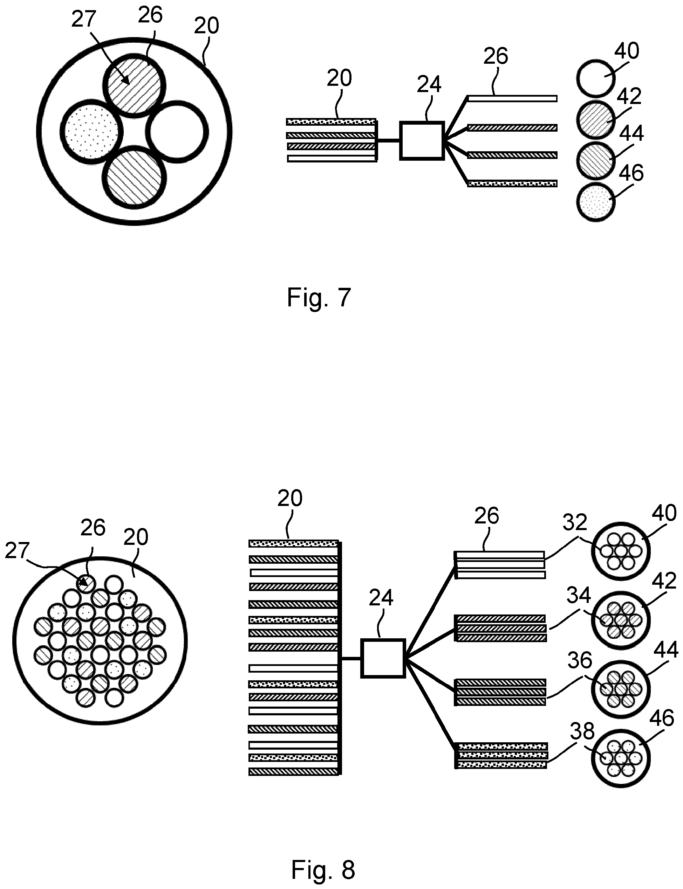

Figur 7 zeigt eine Aufteilung der vier Fasern 26 bei einem Faserbündel 20 mit vier Fasern 26 zum Einkoppeln in die Detektoren 40, 42, 44, 46, während in Figur 8 eine Aufteilung der vier Gruppen 32, 34, 36, 38 von Fasern 26 des Faserbündels 20 zum Einkoppeln in die Detektoren 40, 42, 44, 46 dargestellt ist.

Bei dem Ausführungsbeispiel in Figur 7 geht jeweils eine Faser 26 des Faserbündels 20 von der Faseraufteilung 24 direkt zu einem Detektor 40, 42, 44, 46. Dies ist in der Figur rechts neben dem Faserbündel 20 angedeutet.

Bei dem Ausführungsbeispiel in Figur 8 geht jeweils eine Gruppe 32, 34, 36, 38 von Fasern 26 des Faserbündels 20 von der Faseraufteilung 24 direkt zu einem Detektor 40, 42, 44, 46. Die einzelnen Fasern 26 in dem Faserbündel 20 sind zufällig verteilt angeordnet und werden in der Faseraufteilung 24 in die entsprechenden Gruppen 32, 34, 36, 38 gebündelt. Dies ist in der Figur rechts neben dem Faserbündel 20 angedeutet.

In den Figuren 9 bis 11 sind verschiedene Ausführungsformen des Faserbündels 20 mit einer Vielzahl an Fasern 26 dargestellt. Die gezeigten Ausführungsformen sind alle vorteilhaft, um mögliche Justagefehler bei der Abbildung und Einkopplung des Fluoreszenzlichts 50 auf das Faserbündel 20 auszugleichen. Der Obstruktionsanteil jedoch kann durch dichtere Packung der Fasern 26, wie bei der Anordnung der Fasern 26 des Faserbündels 20 in Figur 10 und in Figur 11 gezeigt, verringert werden. Dadurch kann die Einkopplung des Fluoreszenzlichts 50 in das Faserbündel 20 verbessert werden.

Figur 12 zeigt eine schematische Darstellung der Intensität I des einfallenden Lichts in Abhängigkeit der Zeit t. Dabei ist ein Verlauf des Hintergrundlichts 54 mit einer Überlagerung des laserinduzierten Fluoreszenzlichts 50 dargestellt. In dem punktierten Insert ist dabei der Pulsverlauf des laserinduzierten Fluoreszenzlichts 50 genauer zu erkennen.

Figur 13 zeigt ein typisches Fluoreszenzspektrum 70 in Abhängigkeit der Wellenlänge 28, bei dem vier Spektralbereiche 72, 74, 76, 78 mit einzelnen Detektoren 40, 42, 44, 46 herausgefiltert und mit hoher zeitlicher Auflösung gemessen werden. Das Spektrometer 30 ist dazu zur Auswertung der gefilterten spektralen Bereiche 72, 74, 76, 78 mittels Boxcar-Integration ausgebildet.

Figur 14 zeigt in einer Darstellung der Intensität I in Abhängigkeit der Zeit t eine Erfassung eines zeitlichen Detektorsignals 92 mit einem Integrationsfenster 83. Dabei ist eine hohe zeitliche Auflösung bei der Vier-Kanal-Detektion möglich. In diesem Fall kann per Boxcar-Integration ausschließlich das Fluoreszenzlicht 50 detektiert werden, welches auch durch den Laserpuls angeregt wurde.

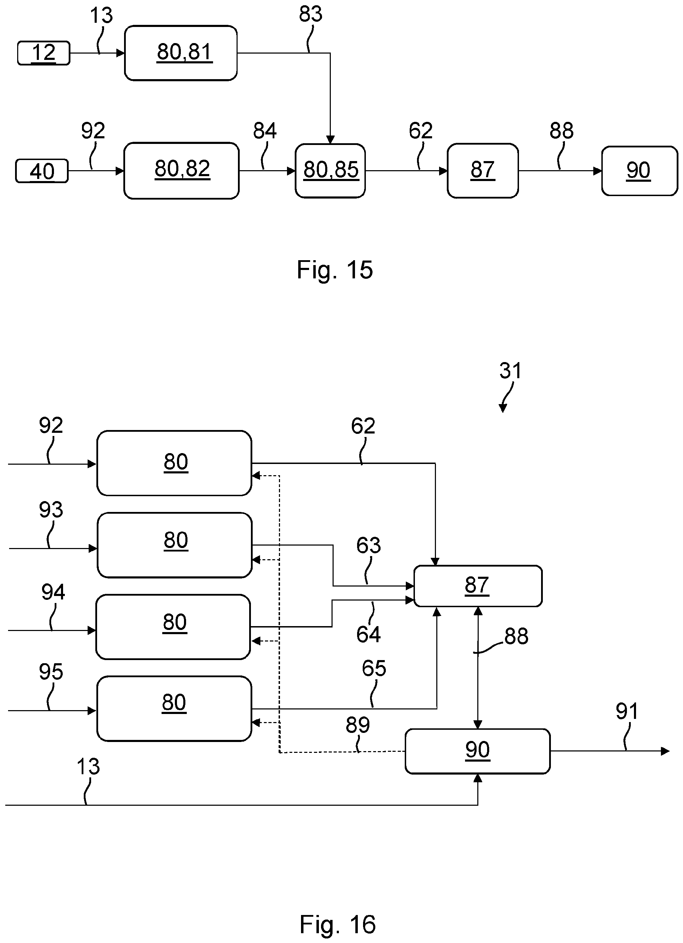

In Figur 15 ist ein Blockschaltbild der Messanordnung mit der Detektorvorrichtung 100 nach einem Ausführungsbeispiel der Erfindung dargestellt. Dabei ist aus Gründen der Übersichtlichkeit eine Schaltung für einen Kanal dargestellt.

Der Laser 12 regt einen Fluoreszenzpuls 50 in der Probe 60 an und gibt gleichzeitig einen Triggerpuls 13 aus. Aus dem Triggerpuls 13 wird in der Funktion 81 das Integrationsfenster erzeugt. Mit einem Detektor 40, beispielsweise einer Avalanche Photodiode, wird der Fluoreszenzpuls 50 in ein elektrisches Signal 92 umgewandelt. Von diesem wird durch die Funktion 82 der Anteil durch Hintergrundlicht 54 abgezogen, sodass das laserinduzierte Fluoreszenzsignal 84 übrigbleibt. Durch den Hintergrundabzug kann die Empfindlichkeit des Integrators 85 höher eingestellt werden, ohne dass dieser durch den Gleichanteil sättigt und der dynamische Bereich bei der AD-Wandlung ist größer. Das Fluoreszenz-Signal 84 wird durch den Gated-Integrator 85 während des Integrationsfensters 83 integriert, sodass das entstehende analoge Ausgangsignal 62 proportional zur Energie des Fluoreszenzpulses 50 ist. Das analoge Ausgangssignal 62 wird mithilfe eines Analog-Digital-Wandlers 87 in ein digitales Signal 88 umgewandelt und über ein USB Interface an den Messrechner 90 verschickt und für die weitere Verwendung zur Verfügung gestellt.

Das Spektrometer 30 der Detektorvorrichtung 100 kann wenigstens eine Platine 31 aufweisen, an der Ausgänge der Fasern 26 angeordnet und/oder optisch angekoppelt sind. Das Spektrometer 30 kann weiter zum automatischen Abzug von Hintergrundlicht 54 von dem übertragenen Fluoreszenzlicht 50 ausgebildet sein.

In Figur 16 ist dazu ein Blockschaltbild einer Vier-Kanal-Platine 31 der Detektorvorrichtung 100 dargestellt. Dabei ist die Umsetzung eines Vier-Kanal Datenerfassungssystems basierend auf einer Integratorschaltung 80 mit Hintergrundabzug skizziert.

Die Platine 31 weist die vier Integratoren 80 mit Hintergrundabzug, einen AD-Wandler 87 sowie einen Mikrocontroller als Messrechner 90 auf. Die Detektorsignale 92, 93, 94, 95 werden in den Integratoren 80 integriert. Der Messrechner 90 erhält dazu auf der einen Seite den Triggerpuls 13 des Lasers 12 und sendet ein Integratorsignal 89 an die Integratoren 80. Die analogen Ausgangssignale 62, 63, 64, 65 werden von den Integratoren 80 dem Analog-Digital-Wandler 87 zugeführt. Die digitalen Ausgangssignale 88 werden in den Messrechner 90 gespeist. Der Messrechner 90 ist mit einer digitalen Kommunikation, beispielsweise einer USB-Übertragung verbunden.

In einem weiteren, nicht dargestellten, Ausführungsbeispiel kann die Messfrequenz der vorgeschlagenen Detektorvorrichtung 100 auf ca. 20 kHz erhöht werden. Diese höhere Frequenz ermöglicht die Umsetzung einer Mehrwellenanregung oder eine höhere Auflösung eines Scanrasters bei einer gerasterten Betriebsweise.

Die Verwendung weiterer Fasern ermöglichen mehr Detektionskanäle, beispielsweise für eine zusätzliche Lidar-Anwendung (Time-of-flight) bei einer Wellenlänge von 1064nm.

### Bezugszeichen

- 10: Detektionsoptik
- 12: Laser
- 13: Lasertrigger
- 14: Strahlanpassung
- 15: Laserlicht
- 16: Umlenkspiegel
- 18: Auskoppelspiegel
- 20: Faserbündel
- 21: Querschnittsfläche Faserbündel
- 22: Einkoppeleinheit
- 24: Faseraufteilung
- 26: Faser
- 27: Eintrittsfläche
- 28: Wellenlänge
- 30: Spektrometer
- 31: Platine
- 32: Gruppe
- 34: Gruppe
- 36: Gruppe
- 38: Gruppe
- 40: Detektor
- 41: Bandpassfilter
- 42: Detektor
- 43: Bandpassfilter
- 44: Detektor
- 45: Bandpassfilter
- 46: Detektor
- 47: Bandpassfilter
- 50: Fluoreszenzlicht
- 51: gestreutes Laserlicht
- 52: Querschnittsfläche des abgebildeten Fluoreszenzlichts
- 54: Hintergrundlicht
- 60: Probe
- 61: Detektionsentfernung
- 62: Analoges Ausganssignal
- 63: Analoges Ausganssignal
- 64: Analoges Ausganssignal
- 65: Analoges Ausganssignal
- 70: Fluoreszenzspektrum
- 72: spektraler Bereich
- 74: spektraler Bereich
- 76: spektraler Bereich
- 78: spektraler Bereich
- 80: Integratorschaltung und Hintergrundabzug
- 81: Erzeugung Integrationsfenster
- 82: Hintergrundabzug
- 83: Integrationsfenster
- 84: Fluoreszenzsignal ohne Hintergrund
- 85: Gated Integrator
- 87: AD-Wandlung
- 88: Digitales Ausgangssignal
- 89: Integratorsignal
- 90: Rechner
- 91: USB-Übertragung
- 92: Detektorsignal
- 93: Detektorsignal
- 94: Detektorsignal
- 95: Detektorsignal
- 100: Detektorvorrichtung

## Patentansprüche

1. Detektorvorrichtung (100) zum Erfassen von Fluoreszenzlicht (50), insbesondere von laserinduziertem Fluoreszenzlicht (50), von einer in einer Detektionsentfernung (61) befindlichen Probe (60), umfassend wenigstens
eine Detektionsoptik (10), welche zum Sammeln und/oder Fokussieren des von der Probe (60) ausgehenden Fluoreszenzlichts (50) sowie zum Einkoppeln des gesammelten und/oder fokussierten Fluoreszenzlichts (50) in ein optisches Faserbündel (20) ausgebildet ist,
ein Spektrometer (30), welches mit dem Faserbündel (20) optisch gekoppelt ist und welches eine Mehrzahl von Detektoren (40, 42, 44, 46) aufweist, welche zum Einkoppeln des von dem Faserbündel (20) übertragenen Fluoreszenzlichts (50) ausgebildet sind,
wobei jeweils eine Gruppe (32, 34, 36, 38) von Fasern (26) des Faserbündels (20) einem Detektor (40, 42, 44, 46) der Mehrzahl von Detektoren (40, 42, 44, 46) zugeordnet ist.

2. Detektorvorrichtung nach Anspruch 1, wobei das Faserbündel (20) wenigstens vier Gruppen (32, 34, 36, 38) von Fasern (26) aufweist und/oder wobei das Spektrometer (30) wenigstens vier Detektoren (40) aufweist.

3. Detektorvorrichtung nach Anspruch 1 oder 2, wobei jedem Detektor (40, 42, 44, 46) der Mehrzahl von Detektoren (40, 42, 44, 46) eine gleiche Anzahl von Fasern (26) zugeordnet ist.

4. Detektorvorrichtung nach einem der vorhergehenden Ansprüche, wobei zwischen den Fasern (26) und den Detektoren (40, 42, 44, 46) jeweils ein optisches Bandpassfilter (41, 43, 45, 47) angeordnet ist, welches einen spektralen Bereich (72, 74, 76, 78) eines Fluoreszenzspektrums (70) des übertragenen Fluoreszenzlichts (50) herausfiltert.

5. Detektorvorrichtung nach Anspruch 4, wobei das Spektrometer (30) zur Auswertung der gefilterten spektralen Bereiche (72, 74, 76, 78) mittels Boxcar-Integration ausgebildet ist.

6. Detektorvorrichtung nach einem der vorhergehenden Ansprüche, wobei eine Querschnittsfläche (21) des Faserbündels (20) wenigstens einer Querschnittsfläche (52) des von der Detektionsoptik (10) auf die Querschnittsfläche (21) des Faserbündels (20) abgebildeten Fluoreszenzlichts (50) entspricht.

7. Detektorvorrichtung nach Anspruch 6, wobei von jeder Gruppe (32, 34, 36, 38) von Fasern (26) wenigstens eine Faser (26) innerhalb der Querschnittsfläche (52) des von der Detektionsoptik (10) auf die Querschnittsfläche (21) des Faserbündels (20) abgebildeten Fluoreszenzlichts (50) angeordnet ist.

8. Detektorvorrichtung nach Anspruch 6 oder 7, wobei jeweils mehr als eine Eintrittsfläche (27) der den jeweiligen unterschiedlichen Detektoren (40, 42, 44, 46) zugeordneten Fasern (26) innerhalb der Querschnittsfläche (52) des von der Detektionsoptik (10) auf die Querschnittsfläche (21) des Faserbündels (20) abgebildeten Fluoreszenzlichts (50) angeordnet ist.

9. Detektorvorrichtung nach einem der Ansprüche 6 bis 8, wobei optische Eintrittsflächen (27) für das Fluoreszenzlicht (50) der den unterschiedlichen Detektoren (40, 42, 44, 46) zugeordneten Fasern (26) über die Querschnittsfläche (52) des von der Detektionsoptik (10) auf die Querschnittsfläche (21) des Faserbündels (20) abgebildeten Fluoreszenzlichts (50) im Wesentlichen gleich verteilt sind.

10. Detektorvorrichtung nach einem der vorhergehenden Ansprüche, wobei das Spektrometer (30) wenigstens eine Platine (31) aufweist, an der Ausgänge der Fasern (26) angeordnet und/oder optisch angekoppelt sind.

11. Detektorvorrichtung nach einem der vorhergehenden Ansprüche, wobei das Faserbündel (20) als Multimode-Faserbündel (20) ausgebildet ist.

12. Detektorvorrichtung nach einem der vorhergehenden Ansprüche, wobei das Spektrometer (30) zum automatischen Abzug von Hintergrundlicht (54) von dem übertragenen Fluoreszenzlicht (50) ausgebildet ist.

13. Verfahren zum Erfassen von Fluoreszenzlicht (50), insbesondere von laserinduziertem Fluoreszenzlicht (50), einer in einer Detektionsentfernung (61) befindlichen Probe (60) mit einer Detektorvorrichtung (100) nach einem der vorhergehenden Ansprüche, umfassend wenigstens die Schritte
- Einstrahlen von gepulstem Laserlicht (15) auf die Probe (60);
- Sammeln und/oder Fokussieren des von der Probe (60) ausgehenden Fluoreszenzlichts (50) durch eine Detektionsoptik (10);
- Einkoppeln des gesammelten und/oder fokussierten Fluoreszenzlichts (50) in ein optisches Faserbündel (20);
- Einkoppeln des von dem Faserbündel (20) übertragenen Fluoreszenzlichts (50) durch einzelne Fasern (26) des Faserbündels (20), welche jeweils einem Detektor (40, 42, 44, 46) einer Mehrzahl von Detektoren (40, 42, 44, 46) zugeordnet sind, in den jeweiligen Detektor (40, 42, 44, 46).

14. Verfahren nach Anspruch 13, wobei in den jeweiligen Detektor (40, 42, 44, 46) ein mittels eines optischen Bandpassfilters (41, 43, 45, 47) gefilterter spektraler Bereich (72, 74, 76, 78) eines Fluoreszenzspektrums (70) des übertragenen Fluoreszenzlichts (50) eingekoppelt wird.

15. Verfahren nach Anspruch 13 oder 14, wobei der in dem jeweiligen Detektor (40, 42, 44, 46) empfangene gefilterte spektrale Bereich (40, 42, 44, 46) des übertragenen Fluoreszenzlicht (50) in dem Spektrometer (30) mittels Boxcar-Integration ausgewertet wird.

16. Verfahren nach einem der Ansprüche 13 bis 15, wobei in dem Spektrometer (30) Hintergrundlicht von dem übertragenen Fluoreszenzlicht (50) automatisch abgezogen wird.
